# EUROPÄISCHE PATENTSCHRIFT

(11) **EP 2 274 900 B1**
(45) Veröffentlichungstag und Bekanntmachung des Hinweises auf die Patenterteilung: **07.01.2015**
(21) Anmeldenummer: 09737870.7
(22) Anmeldetag: 28.04.2009
(51) Int. Cl.: H04M 3/436, H04M 3/54

(54) **VERFAHREN UND KOMMUNIKATIONSEINRICHTUNG ZUM ETABLIEREN EINER ALTERNATIVEN KOMMUNIKATIONSÜBERTRAGUNG**
METHOD AND COMMUNICATION DEVICE FOR ESTABLISHING AN ALTERNATIVE COMMUNICATION TRANSMISSION
PROCÉDÉ ET DISPOSITIF DE COMMUNICATION POUR ÉTABLIR UNE TRANSMISSION DE COMMUNICATION ALTERNATIVE

(30) Priorität: 30.04.2008 DE 102008021608
(43) Veröffentlichungstag der Anmeldung: 19.01.2011
(73) Patentinhaber: Unify GmbH & Co. KG, 81379 München (DE)
(72) Erfinder: LEDERER, Thomas, 82211 Herrsching (DE)
(74) Vertreter: Fritzsche, Thomas
(86) Internationale Anmeldenummer: PCT/EP2009/003088
(87) Internationale Veröffentlichungsnummer: WO 2009/132826

(56) Entgegenhaltungen:
- WO-A-98/42114
- US-A1- 2005 288 002

## Beschreibung

Die Erfindung betrifft ein Verfahren gemäß dem Gattungsbegriff des Anspruchs 1 und eine Kommunikationseinrichtung gemäß dem Gattungsbegriff des Anspruchs 14 zum Etablieren einer Kommunikationsübertragung für mehrmalig fehlgeschlagene Verbindungen zu einer Ziel-Endeinrichtung.

Im Büroalltag einer Firma kann es vorkommen, dass einzelne Mitarbeiter nicht durchwegs problemlos über ein Arbeitsplatz-Telefon eines firmen-eigenen Telefon-Kommunikationssystems erreichbar sind. Dies ist beispielsweise dann gegeben, wenn ein Mitarbeiter sich nicht dauerhaft an seinem Arbeitsplatz aufhält, beispielsweise wenn er sich in einem Besprechungsraum befindet, auf Dienstreise ist oder Urlaub hat. Es besteht nun häufig bei dringenden Angelegenheiten der Wunsch, diesen Mitarbeiter trotz alledem zu erreichen, doch hat ein Anrufer üblicherweise lediglich die Wahl entweder eine Sprach-Nachricht auf einem dem Arbeitsplatz-Telefon zugeordneten Anrufbeantworter zu hinterlassen, oder über weitere Personen eine Auskunft über den Verbleib des gewünschten Mitarbeiters zu erlangen, um diesen dann eventuell über eine ihm genannte alternative Rufnummer zu erreichen. Zusätzlich besteht für den gesuchten Mitarbeiter häufig der Wunsch, in seinem Urlaub, auf Dienstreise oder in einer Besprechung nur bei wirklich dringenden Gesprächsanfragen gestört zu werden. Weiterhin kann für den gesuchten Mitarbeiter von Interesse sein, eine alternative Rufnummer - z. B. die eines Mobiltelefons oder eines privaten Telefons - nicht allgemein Bekanntzugeben, da diese alternative Rufnummer dann wahrscheinlich auch zu anderen Zeiten genutzt würde, in denen der Mitarbeiter eigentlich über sein primäres Arbeitsplatztelefon erreichbar wäre.

In WO 98/42114 ist ein Anwendungsmodul beschrieben, das mit einer Telekommunikations-Vermittlungsstelle eines gerufenen Teilnehmers in Verbindung steht, die Daten beibehält, die die Anzahl von Anrufversuchen widerspiegeln, die von einem Anrufer in Richtung zu dem beschränkt erreichbaren oder gesperrten gerufenen Teilnehmer stattfinden. Falls die Anzahl der Anrufversuche, die vom Anrufer innerhalb einer vordefinierten Zeitperiode vorgenommen werden, einen bestimmten Schwellenwert erreicht, wird ein Anruf in Richtung des ansonsten beschränkt erreichbaren gerufenen Teilnehmers bewirkt.

Es ist Aufgabe der Erfindung eine verbesserte Lösung zum Verbinden zu einem gewünschten Teilnehmer anzubieten, so dass einem Anrufer bei dringenden Anrufen ermöglicht wird mit dem gewünschten Teilnehmer in Kontakt zu treten.

Gelöst wird diese Aufgabe durch ein Verfahren mit den Merkmalen des Patentanspruchs 1, sowie durch eine Kommunikationseinrichtung mit den Merkmalen des Patentanspruchs 15.

Vorteilhafte Weiterbildungen und Ausgestaltungen der Erfindung sind darüber hinaus in den abhängigen Ansprüchen angegeben.

Bei dem erfindungsgemäßen Verfahren zum Etablieren einer Kommunikationsübertragung, ist ein Erkennen einer im Rahmen eines Verbindungsaufbaus von einer ersten Endeinrichtung ausgehenden an eine zweite Endeinrichtung gerichteten ursprünglichen Signalisierung ein für die weiteren Verfahrensschritte auslösendes Ereignis. Die zweite Endeinrichtung wird dabei über eine der zweiten Endeinrichtung zugeordneten Zieladresse adressiert. Nach Erkennen der ursprünglichen Signalisierung wird erfasst, in welcher Anzahl weitere Signalisierungen mit derselben die erste Endeinrichtung spezifizierenden Absendeadresse und derselben Zieladresse im Rahmen weiterer Verbindungsaufbauversuche erkannt werden. Weiterhin erfolgt eine Auswertung einer Zeit-Information bezüglich Zeitpunkten des Erkennens der erkannten ursprünglichen Signalisierung und der erkannten weiteren Signalisierungen in Relation zu einer vorgegebenen mindestens einen Zeitspanne. Bei positivem Auswertungsergebnis und bei Überschreiten der erfassten Anzahl von erkannten weiteren Signalisierungen mit derselben Absendeadresse und derselben Zieladresse gegenüber einem Vergleichswert für einen zuletzt erkannten Verbindungsaufbauversuch der weiteren Verbindungsaufbauversuche wird daraufhin eine alternative Kommunikationsübertragung etabliert.

Das Verfahren ist dabei insbesondere vorteilhaft, als dass nach mehrmaligen Kontaktversuchen innerhalb einer gegebenen Zeitspanne, eine alternative Kommunikationsübertragung - vorzugsweise gerichtet an eine alternative Zieladresse - ausgelöst wird, über die eine bessere Erreichbarkeit des adressierten Teilnehmers, der üblicherweise die zweite Endeinrichtung bedient, erwartet wird.

Bei der ursprünglichen Signalisierung und den weiteren Signalisierungen handelt es sich insbesondere um Verbindungsaufbausignalisierungen für Telefonverbindungen über leitungsvermittelte oder paketorientierte Netzwerke. Dabei kann es sich insbesondere um Signalisierungen handeln, die in einem Besetztzeichen oder Freizeichen für die angesprochene zweite Endeinrichtung resultieren ohne dass eine Sprach- oder Nutzdatenverbindung durchgeschaltet wird. Weiterhin kann die Signalisierung zu einem Durchschalten zu einer Anrufbeantworterfunktion führen. Für diese Varianten gilt dabei ebenfalls, dass der adressierte Teilnehmer nicht erfolgreich erreicht worden ist, so dass sich kein Gespräch zwischen zwei Teilnehmern ergibt.

Die erste und die zweite Endeinrichtung sind vorzugsweise schnurgebundene oder schnurlose Telefone. Weiterhin kann es sich um Mobilfunkendgeräte oder um auf Arbeitsplatzrechnern ablaufende Telefonie-Applikationen handeln. Die Zieladresse und die Absendeadresse sind Rufnummern oder typischerweise in paketvermittelten Netzen verwendete Adressen wie IP-Adressen (IP: Internet Protocol) oder so genannten SIP-URIs (SIP: Session Initiation Protocol; URI: Uniform Resource Identifier).

Die vorgegebene mindestens eine Zeitspanne ist vorzugsweise eine Angabe eines Wertes, der angibt wie viel Zeit maximal zwischen dem Erkennen der ursprünglichen Signalisierung und dem Erkennen einer zuletzt eingegangenen Signalisierung maximal verstreichen darf. Die Auswertung ist dann die Differenzbildung der Zeiten des Auftretens bzw. des Erkennens zwischen der zuletzt eingegangenen Signalisierung und der ursprünglichen - erstmalig eingegangenen - Signalisierung. Ein positives Auswertungsergebnis sei in einem derartigen Szenario dann gegeben, wenn die sich ergebene Zeitdifferenz kleiner ist als die vorgegebene Zeitspanne. Das bedeutet, dass für das erfindungsgemäße Verfahren ein erster Teilnehmer mehrmals hintereinander versucht von der ersten Endeinrichtung die zweite Endeinrichtung zu kontaktieren. Bei Erreichen bzw. Überschreiten einer gewissen Anzahl an Kontaktierungsversuchen und bei Verbleiben der gebildeten Zeitdifferenz unterhalb der vorgegebenen Zeitspanne, wird das Gesuch des ersten Teilnehmers den zweiten Teilnehmer zu kontaktieren als "dringend" kategorisiert und daraufhin die alternative Kommunikationsübertragung initiiert bzw. etabliert.

Die alternative Kommunikationsübertragung ist vorzugsweise eine Umleitung des Verbindungsaufbauversuchs an eine dritte Endeinrichtung, so dass die von der ersten Endeinrichtung ausgehende und bei der zweiten Endeinrichtung zuletzt eingehende Signalisierung derart modifiziert wird, dass zusätzlich eine Signalisierung zwischen der zweiten und der dritten Endeinrichtung initiiert wird oder alternativ eine Signalisierung zwischen der ersten und der dritten Endeinrichtung erfolgt, mit der Zielsetzung, dass eine Verbindung zwischen der ersten und der dritten Endeinrichtung durchgeschaltet wird und auf diese Weise der zweite Teilnehmer erfolgreich über die dritten Endeinrichtung erreicht werden kann.

In einer weiteren vorteilhaften Ausgestaltung kann die alternative Kommunikationsübertragung als eine Mitteilung an eine dritte Endeinrichtung ausgebildet sein, beispielsweise eine SMS (Short Message Service) an ein Mobilfunktelefon. Diese Mitteilung kann dann beschreibende Informationen zu den bisherigen Signalisierungen und eine Information zur Absendeadresse aufweisen, so dass für den zweiten Teilnehmer leicht ermittelbar wird, welche Person ihn dringend erreichen möchte und in welchem Zeitraum diese Person dies bisher probiert hat.

Alternativ zu einer Übertragung via SMS kann auch eine andere Form von textueller, sprachlicher oder multimedialer Mitteilung vorgesehen sein. Beispielsweise kann eine E-Mail an eine E-Mail-Adresse übermittelt werden. Dies ist insbesondere bei E-Mail-fähigen mobilen Endeinrichtungen sinnvoll. Darüber hinaus ist das Ansprechen eines so genannten Instant Messaging Service denkbar oder eines so genannten Push-Dienstes, wie der unter der Bezeichnung Blackberry™ bekannte Dienst. Wie bereits angedeutet, sind solche Dienste besonders bevorzugt, die durch mobile Endgeräte abgefragt werden können, wobei ein bevorzugter Dienst idealerweise auch eine Antwortmöglichkeit über einen vom Anrufer gewünschten Kommunkationsweg bereitstellt, so dass der zweite Teilnehmer die Möglichkeit erhält, den ersten Teilnehmer ausgehend von der dritten Endeinrichtung zu kontaktieren.

Das Initiieren der alternativen Kommunikationsübertragung kann dabei durch die zweite Endeinrichtung, durch ein Kommunikationssystem - insbesondere wenn es sich bei der zweiten Endeinrichtung um ein System-Telefon handelt - oder durch eine Übergangseinrichtung - üblicherweise als Gateway bezeichnet - erfolgen. Eine derartige Vorrichtung ist dabei vorzugsweise derart konfiguriert, dass dort zugeordnet zu einer die zweite Endeinrichtung identifizierenden Information eine Zieladresse der dritten Endeinrichtung gespeichert ist und ausgelesen werden kann, um unter Adressierung dieser Zieladresse die alternative Kommunikationsübertragung zu etablieren.

In einer vorteilhaften Weiterbildung des Verfahrens kann vorgesehen sein, an die die Signalisierungen auslösende erste Endeinrichtung bei Etablieren der alternativen Kommunikationsübertragung eine Quittung zu übermitteln, mittels der an der ersten Endeinrichtung textuell oder als Sprachausgabe ausgegeben werden kann, dass nun eine besondere, bevorzugte Kontaktaufnahme zum zweiten Teilnehmer ausgelöst wird. Somit wird dem ersten Teilnehmer angezeigt, dass er keine weiteren Verbindungsaufbauversuche manuell anstoßen braucht, da gesichert ist, dass der zweite Teilnehmer über die bisherigen Kontaktierungsversuche zumindest informiert wird bzw. eine Verbindung zwischen dem ersten und dem zweiten Teilnehmer - also der ersten und der dritten Endeinrichtung - aufgebaut wird.

Die Auswertung der erfindungsgemäßen Zeit-Information kann derart erfolgen, dass lediglich eine Zeit-Differenz zwischen dem Eingang der ursprünglichen Signalisierung und dem Eingang der zuletzt vorliegenden weiteren Signalisierung gebildet wird. Überschreitet für eine Anzahl von wiederholten Signalisierungen die Zeit-Differenz die vorgegebene mindestens eine Zeitspanne, so wird dies als negatives Auswertungsergebnis bewertet. Liegt die Zeit-Differenz jedoch unterhalb der vorgegebenen mindestens einen Zeitspanne, so stellt dies ein positives Auswertungsergebnis dar.

Als die Zeit-Information wird die Zeitdifferenz zwischen zwei Signalisierungen ausgewertet, wobei davon ausgegangen wird, dass für einen als dringend zu klassifizierenden Anruf eine vorgegebene Zeitspanne zwischen zwei Signalisierungen nicht überschritten wird. Ein positives Auswertungsergebnis ist folglich gegeben, wenn ab der ursprünglichen Signalisierung der zeitliche Abstand einer weiteren Signalisierung zu einer jeweilig direkt vorhergehenden Signalisierung für alle auftretenden weiteren Signalisierungen die vorgegebene Zeitspanne jeweils unterschreitet.

Erfindungsgemäß wird die Anzahl an weiteren Signalisierungen ab der ursprünglichen Signalisierung gezählt. Vorzugsweise wird dazu ein Zähler gepflegt und bei jeder auftretenden Signalisierung inkrementiert. Der Zähler kann dabei neu initialisiert und zurückgesetzt werden, wenn eine der Signalisierungen zu einer erfolgreichen Durchschaltung zur zweiten Endeinrichtung für den Aufbau einer aktiven Kommunikationsverbindung zum zweiten Teilnehmer führt oder wenn die alternative Kommunikationsübertragung etabliert wird.

Optional kann auch bei Erkennen eines Besetztzeichens bei der zweiten Endeinrichtung der Zähler neu initialisiert werden, da dies üblicherweise bedeutet, dass der zweite Teilnehmer nun wieder über die zweite Endeinrichtung erreichbar ist.

Alternativ dazu kann bei Erkennen eines Besetztzeichen der Zähler weiter inkrementiert werden, da bei hoch mobilen Teilnehmern nicht schlüssig davon ausgegangen werden kann, dass der Teilnehmer nun dauerhaft am Arbeitsplatz anzutreffen sein wird.

In einer vorteilhaften Ausgestaltung der Erfindung, wird der Zähler dann inkrementiert, wenn eine der Signalisierungen zwischen der ersten und der zweiten Endeinrichtung zu einem Melden eines Freizeichens führt, jedoch keine erfolgreiche Sprachverbindung aufgebaut wird und die Signalisierung und somit der Kontaktversuch durch die erste Endeinrichtung abgebrochen wird. Dies ist ein denkbares typisches Szenario, wenn der zweite Teilnehmer sich nicht am Arbeitsplatz aufhält und der erste Teilnehmer nach gewisser Wartezeit und durchgängigem Melden eines Freizeichens den Hörer der ersten Endeinrichtung auflegt.

In einer weiteren vorteilhaften Ausgestaltung der Erfindung, wird der Zähler dann inkrementiert, wenn die Signalisierung lediglich dazu führt, dass eine Sprach-Verbindung von der ersten Endeinrichtung zu einem Anrufbeantworter oder einer Anrufbeantworterfunktion aufgebaut wird, und somit keine direkte Sprachverbindung zwischen dem ersten Teilnehmer und dem zweiten Teilnehmer ermöglicht wird.

In einer vorteilhaften Ausgestaltung kann das erfindungsgemäße Verfahren durch den zweiten Teilnehmer aktiv oder inaktiv geschaltet werden. Dies kann manuell erfolgen oder durch Auswertung eines so genannten Präsenz-Zustands - Zustände wie "Person ist am Arbeitsplatz", "Person ist außer Haus", "Person ist in Besprechung" -, der durch das Kommunikationssystem bezüglich dem Anwesenheitszustand des zweiten Teilnehmers aktualisiert wird.

Die vorliegende Erfindung und deren Weiterbildungen werden nachfolgend im Rahmen eines Ausführungsbeispiels an Hand von Figuren näher erläutert.

Dabei zeigen in schematischer Darstellung die
- Figur 1: ein Kommunikationssystem mit den am erfindungsgemäßen Verfahren beteiligten Einrichtungen und im Kommunikationssystem auftretende Meldungen,
- Figur 2: eine Tabelle zur Verwaltung der Anzahl und Zeitinformationen bezüglich eingehender, nicht erfolgreich durchgeschalteter Anrufe, und
- Figur 3: ein abgewandeltes Kommunikationssystem mit den am erfindungsgemäßen Verfahren beteiligten Einrichtungen und im Kommunikationssystem auftretende Meldungen.

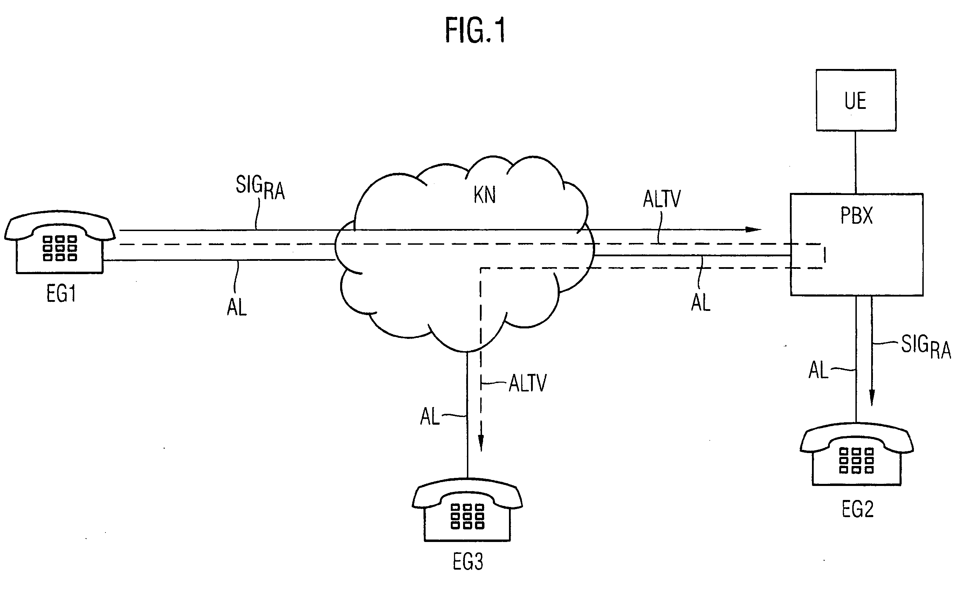

In Figur 1 ist in schematischer Darstellung ein Kommunikationssystem angegeben, bei dem über ein Kommunikationsnetz KN eine erste Endeinrichtung EG1, eine Vermittlungsanlage PBX und eine als dritte Endeinrichtung EG3 bezeichnete weitere Endeinrichtung über jeweilige Anschluss- und Amtsleitungen AL verbindbar angeordnet sind.

Die Endeinrichtungen EG1 und EG3 sind dabei vorzugsweise Telefone für Sprachübertragung. Das Kommunikationsnetz KN kann ein analoges oder digitales leitungsvermitteltes Telefonnetz sein, jedoch auch alternativ oder zusätzlich paketorientierte Übertragungstechniken oder Mobilfunk-Übertragungen erlauben. Die Anschluss- oder Amtsleitungen AL sind folglich entweder ein Festnetzanschluss oder repräsentieren einen Zugang zu einem Mobilfunknetz über eine Funk-Schnittstelle.

Darüber hinaus ist eine zweite Endeinrichtung EG2 dargestellt, die ein Systemtelefon zur Vermittlungsanlage PBX darstellt. Die Kopplung der zweiten Endeinrichtung EG2 mit der Vermittlungsanlage PBX wird in Figur 1 ebenfalls als Anschlussleitung AL bezeichnet.

Die Vermittlungsanlage PBX kann vorzugsweise eine Telefonanlage zur Ansteuerung einer Vielzahl von Systemtelefonen sein, beispielsweise eine Nebenstellenanlage in einem Firmennetzwerk. Falls die Vermittlungsanlage PBX darüber hinaus einen Übergang von verschiedenen Übertragungstechniken bereitstellt, kann es sich bei der Vermittlungsanlage PBX auch um eine Übergangseinrichtung - üblicherweise als Gateway bezeichnet - handeln.

An die Vermittlungsanlage PBX ist ferner eine Überwachungseinheit UE gekoppelt, die vorzugsweise bei der Vermittlungsanlage PBX eingehende Signalisierungen mitprotokolliert und auswertet, sowie die Vermittlungsanlage PBX ansteuern kann, um Verbindungen umzuleiten, neue Verbindungen aufzubauen, etc.

Die Überwachungseinheit UE ist in Figur 1 als separate Einheit dargestellt, doch kann die Funktion zentral in die Vermittlungsanlage PBX integriert werden oder dezentral durch verschiedene Telefone wie der zweiten Endeinrichtung EG2 wahrgenommen werden.

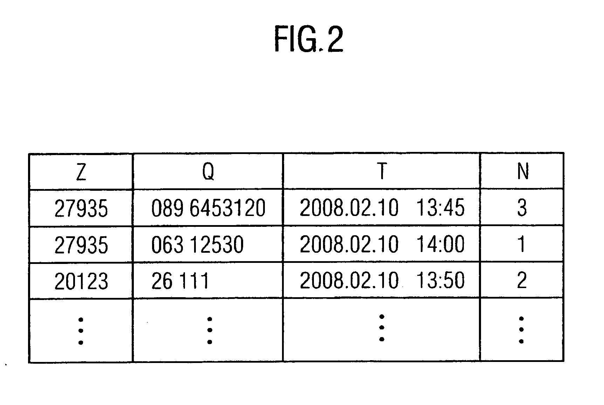

Die erfindungsgemäßen Verfahrensschritte werden im Weiteren anhand der Figuren 1 und 2 erläutert, so dass vorab die

Darstellung von Figur 2 näher spezifiziert wird. In Figur 2 ist eine durch die Überwachungseinheit UE bereitgestellte und durch diese stets aktualisierte Tabelle schematisch angegeben. Die Tabelle umfasst Spalten für eine Zielrufnummer Z, eine Quellrufnummer Q, einen Zeitpunkt T und eine Anzahl N. Die Zielrufnummer Z entspricht für die zweite Endeinrichtung EG2 der erfindungsgemäßen Zieladresse und stellt eine Information dar, mittels der eine Endeinrichtung für Verbindungen adressiert werden kann - beispielsweise eine Telefonnummer. Die Quellrufnummer Q entspricht für die erste Endeinrichtung EG1 der erfindungsgemäßen Absendeadresse und stellt eine im Rahmen einer Signalisierung übermittelten, die die Signalisierung auslösende Endeinrichtung eindeutig spezifizierende Information dar. Dies ist beispielsweise eine mittels CLIP (Calling Line Identification Presentation) übertragene Telefonnummer.

Der Zeitpunkt T stellt bei mehreren vorliegenden Verbindungsversuchen den Zeitpunkt des frühesten Verbindungsversuchs dar. Somit kann eine Zeitdifferenz zur aktuellen Zeit bestimmt werden.

Die Anzahl N repräsentiert die Anzahl an wiederholten Signalisierungen für verschiedene Verbindungsaufbauversuche, die ab dem Zeitpunkt T nach einer ursprünglichen Signalisierung von der jeweiligen Quellrufnummer Q an die jeweilige Zielrufnummer Z bis zum aktuellen Zeitpunkt gerichtet wurden, mit dem Zweck einen Verbindungsaufbau zu ermöglichen.

Nicht dargestellt, existiert vorzugsweise eine weitere Tabelle mit einer Zuordnung von der Zielrufnummer Z zu einer konfigurierten alternativen Zieladresse. Diese Alternative Zieladresse stellt dabei eine Adresse dar, die für die alternative Kommunikationsübertragung angesprochen werden soll, wenn mehrere Verbindungsversuche innerhalb einer vorgegebenen Zeitspanne fehlgeschlagen sind.

Anhand der Figuren 1 und 2 wird nun im Folgenden das erfindungsgemäße Verfahren veranschaulicht.

Ausgangssituation sei ein Ruhezustand aller in Figur 1 dargestellten Endeinrichtungen EG1, EG2, EG3. Es sei angenommen dass ein erster Teilnehmer die erste Endeinrichtung EG1 bedient. Weiterhin sei angenommen, dass ein zweiter Teilnehmer die zweite und die dritte Endeinrichtung EG2, EG3 bedienen kann, da sich diese in dessen Wirkungsumfeld befinden, jedoch aus beliebigen Gründen der zweite Teilnehmer einen an der zweiten Endeinrichtung EG2 eingehenden Verbindungsversuch nicht beantwortet. Ein Grund mag sein, dass die zweite Endeinrichtung EG2 ein Telefon am Arbeitsplatz des zweiten Teilnehmers darstellt, doch der zweite Teilnehmer sich nicht im Umfeld seines Arbeitsplatzes aufhält.

Ausgangssituation sei weiterhin, dass in der in Figur 2 dargestellten Tabelle zu Beginn des Verfahrens kein Eintrag für die Rufnummer der zweiten Endeinrichtung EG2 als Zielrufnummer Z und die Rufnummer der ersten Endeinrichtung EG1 als Quellrufnummer Q vorhanden ist.

Wird nun ein Verbindungsaufbau von der ersten Endeinrichtung EG1 zur zweiten Endeinrichtung EG2 angestrebt, so wird eine Signalisierung SIG_{RA} für einen Rufaufbau von der ersten Endeinrichtung EG1 an die Vermittlungsanlage PBX und weiter an die zweite Endeinrichtung EG2 übermittelt. Die Ruflenkung erfolgt dabei durch Adressieren von der der zweiten Endeinrichtung EG2 zugeordneten Rufnummer als Zieladresse.

Dieser Verbindungsaufbau wird anhand der bei der Vermittlungsanlage PBX eingehenden Signalisierung SIG_{RA} durch die Überwachungseinheit UE erkannt, woraufhin die Absende-Rufnummer der ersten Endeinrichtung EG1 und die Ziel-Rufnummer der zweiten Endeinrichtung EG2 aus der Signalisierung SIG_{RA} ausgelesen und erfasst werden. Weiterhin wird der aktuell vorliegende Zeitpunkt erfasst. Existiert für das Wertepaar der Absende-Rufnummer und der Ziel-Rufnummer bisher kein Eintrag in der in Figur 2 dargestellten Tabelle, wird ein Eintrag für dieses Wertepaar erzeugt und darüber hinaus in dem Eintrag der erfasste Zeitpunkt als Zeitpunkt T gesetzt. Weiterhin wird als Anzahl N für die Anzahl an Wiederholungen die Zahl 0 gesetzt, da die erfasste Signalisierung SIG_{RA} für den Betrachtungszeitraum die erste eingegangene Signalisierung von der ersten Endeinrichtung EG1 an die zweite Endeinrichtung EG2 darstellt. Diese erste erfasste Signalisierung stellt somit die erfindungsgemäße ursprüngliche Signalisierung dar.

Es wird angenommen, dass der zweite Teilnehmer die eingehende Signalisierung SIG_{RA} nicht an der zweiten Endeinrichtung EG2 annimmt und folglich keine Sprachverbindung durchgeschaltet wird. Der Verbindungsaufbauversuch wird daraufhin durch die erste Endeinrichtung EG1 oder durch die Vermittlungsanlage PBX beendet. Die erste und die zweite Endeinrichtung EG1, EG2 gehen in einen Ruhezustand über.

Wird nun nach einer kurzen Wartezeit erneut ein Verbindungsaufbauversuch an der ersten Endeinrichtung EG1 initiiert, so kann bei Eingang einer weiteren an die zweite Endeinrichtung EG2 gerichtete Signalisierung SIG_{RA} an der Vermittlungsanlage PBX durch die Überwachungseinheit UE erkannt werden, dass innerhalb kurzer Zeit von der selben Absende-Endeinrichtung an die selbe Ziel-Endeinrichtung zwei Verbindungsaufbauversuche initiiert wurden.

Die Ermittlung der Anzahl an Verbindungsaufbauversuchen geschieht unter Zuhilfenahme des vorher erzeugten Eintrags in der in Figur 2 dargestellten Tabelle und Auslesen der Feldes der Anzahl N für die aus der Signalisierung SIG_{RA} ermittelbare Absende-Rufnummer der ersten Endeinrichtung EG1 und für die ebenfalls aus der Signalisierung SIG_{RA} ermittelbare Ziel-Rufnummer der zweiten Endeinrichtung EG2, wodurch durch einfaches Inkrementieren des Wertes der Anzahl N die nun gültige Anzahl an erkannten weiteren Verbindungsaufbauversuchen ermittelt wird. Der sich ergebene Wert ist im vorliegenden Beispiel der Wert 1, da es sich insgesamt um den zweiten Verbindungsaufbauversuch von der ersten Endeinrichtung EG1 and die zweite Endeinrichtung EG2 handelt - und somit um die erste wiederholte Signalisierung -, und kann daraufhin für den entsprechenden Datensatz in der in Figur 2 dargestellten Tabelle aktualisiert werden.

Weiterhin wird eine Zeit-Differenz als erfindungsgemäße Zeit-Information gebildet, und zwar zwischen dem ermittelten Zeitpunkt des Erkennens der erneut eingehenden Signalisierung SIG_{RA} und dem gespeicherten Wert im Feld T der in Figur 2 dargestellten Tabelle. Diese ermittelte Zeit-Differenz wird dabei mit einer vorgegebenen Referenz-Zeitspanne im Rahmen einer Auswertung durch die Überwachungseinheit UE verglichen, wobei eine Zeit-Differenz, die einen geringeren Wert aufweist als die Referenz-Zeitspanne, als positives Vergleichs- bzw. Auswertungsergebnis definiert wird.

Bei positivem Auswertungsergebnis wird ferner überprüft, ob die Anzahl an erkannten Verbindungsaufbauversuchen von der ersten Endeinrichtung EG1 an die zweite Endeinrichtung EG2 - im vorliegenden Verfahrensschritt der Wert 1 - einen vorgegebenen Vergleichswert überschreitet. Unter der Annahme, dass der Vergleichswert beispielsweise 3 sei, ist dies in diesem Fall nicht gegeben. Es erfolgt somit keine besondere Abarbeitung für die eingehende Signalisierung SIG_{RA}. An der zweiten Endeinrichtung EG2 wird somit ein eingehender Ruf signalisiert und an der ersten Endeinrichtung EG1 wird ein Freizeichen ausgegeben.

Erneut wird nun davon ausgegangen, dass der Ruf nicht durchgeschaltet wird und der Verbindungsaufbauversuch durch die erste Endeinrichtung EG1 beendet wird.

Es wird nun angenommen dass im Folgenden nach jeweils kurzer Wartezeit zwei weitere an die zweite Endeinrichtung EG2 gerichtete Verbindungsaufbauversuche an der ersten Endeinrichtung EG1 ausgelöst werden. Der Verfahrensablauf verläuft entsprechend dem zweiten Verbindungsaufbauversuch, unter der Annahme, dass die Auswertung der Zeit-Information weiterhin ein positives Ergebnis liefert - d.h. die Referenz-Zeitspanne wird durch die Zeitspanne zwischen der ursprünglichen, ersten Signalisierung SIG_{RA} und der zuletzt eintreffenden weiteren Signalisierung SIG_{RA} nicht.überschritten.

Durch die beiden eingehenden Signalisierungen SIG_{RA} im Rahmen der zwei weiteren Verbindungsaufbauversuche, wird die Anzahl N jeweils inkrementiert und somit von 1 auf 3 erhöht, jedoch überschreitet die Anzahl N weiterhin nicht den angenommenen Vergleichswert von 3, so dass auch in diesen beiden Fällen keine alternative Kommunikationsübertragung ausgelöst wird.

Im Folgenden wird angenommen, dass erneut ein Verbindungsaufbauversuch nach nicht allzu langer Wartezeit von der ersten Endeinrichtung EG1 an die zweite Endeinrichtung EG2 angestoßen wird. Eine daraufhin an der Vermittlungsanlage PBX eingehende weitere Signalisierung SIG_{RA} wird durch die Überwachungseinheit UE erkannt. Durch die Überwachungseinheit UE wird anhand der gespeicherten Anzahl N ermittelt, dass es sich bei der zuletzt eingehenden weiteren Signalisierung SIG_{RA} um den vierten weiteren Verbindungsaufbauversuch und insgesamt fünften Verbindungsaufbauversuch von der ersten Endeinrichtung EG1 an die zweite Endeinrichtung EG2 handelt.

Durch Vergleich der ermittelten Anzahl von 4 weiteren Signalisierungen mit dem angenommenen Vergleichswert von 3 kann durch die Überwachungseinheit UE erkannt werden, dass der Vergleichswert überschritten wurde und somit das eine der beiden Kriterien für den Aufbau der alternativen Kommunikationsübertragung erfüllt ist.

Das zweite Kriterium betrifft die Auswertung der Zeit-Information. Es wird erneut die Zeitspanne zwischen der ursprünglichen Signalisierung SIG_{RA} - dieser Zeitpunkt ist auszulesen über die in Figur 2 dargestellte Tabelle, Feld T - und dem Zeitpunkt des Erkennens der zuletzt eingegangenen weiteren Signalisierung SIG_{RA} bestimmt. Diese ermittelte Zeitspanne wird dabei mit der vorgegebenen Referenz-Zeitspanne im Rahmen einer Auswertung durch die Überwachungseinheit UE verglichen.

Im vorliegenden Beispiel wird angenommen, dass die ermittelte Zeitspanne kürzer ist als die Referenz-Zeitspanne, was als positives Vergleichs- bzw. Auswertungsergebnis angesehen wird. Somit ist auch das zweite Kriterium erfüllt.

Da also beide Kriterien erfüllt sind, wird nun erfindungsgemäß für den zuletzt erkannten Verbindungsaufbauversuch eine alternative Kommunikationsübertragung ALTV initiiert. Dies sei im Beispiel gemäß einer Konfiguration in der Vermittlungsanlage PBX eine Umleitung der Rufsignalisierung zur dritten Endeinrichtung EG3. Die zuletzt eingehende Signalisierung SIG_{RA} wird durch die Vermittlungsanlage PBX nicht zur zweiten Endeinrichtung EG2 weitergeleitet, sondern es erfolgt eine Rufaufbau-Signalisierung zur dritten Endeinrichtung EG3. An der den Ruf auslösenden ersten Endeinrichtung EG1 ergibt sich das selbe Verhalten wie bisher, d.h. dieser ersten Endeinrichtung EG1 wird der aktuelle Zustand der Ziel-Endeinrichtung - in diesem Fall aber dritten Endeinrichtung EG3 und nicht der zweiten Endeinrichtung EG2 - übermittelt, so dass dort ein Freizeichen oder ein Besetztzeichen entsprechend dem Zustand der dritten Endeinrichtung EG3 ausgegeben wird. An der dritten Endeinrichtung EG3 wird wie an diesem Endgerät üblich der eingehende Ruf akustisch und / oder optisch angezeigt, also z.B. durch einen Klingelton und / oder durch eine Leuchtdiode oder Anzeige.

Falls sich nun der zweite Teilnehmer im Umfeld der dritten Endeinrichtung EG3 aufhält, kann er den Ruf annehmen und es ergibt sich eine erfolgreiche Sprach-Verbindung zwischen der ersten Endeinrichtung EG1 und der dritten Endeinrichtung EG3.

Vorzugsweise wird die Umleitung zur dritten Endeinrichtung EG3 dabei so aufgebaut, dass für die alternative Kommunikationsübertragung ALTV als die an der dritten Endeinrichtung EG3 signalisierte Absendeadresse die Rufnummer der ersten Endeinrichtung EG1 übermittelt wird.

Ferner handelt es sich bei der dritten Endeinrichtung EG3 insbesondere um ein in einem privaten Haushalt betriebenes Endgerät oder um ein Mobilfunkgerät des zweiten Teilnehmers, wobei insbesondere ein derartiges Endgerät als Ziel für die alternative Kommunikationsübertragung konfiguriert ist, mittels dem eine höhere Erreichbarkeit des zweiten Teilnehmers zu erwarten ist. Somit erhöht sich deutlich die Chance, für den vermeintlich dringenden Anruf den zweiten Teilnehmer zu erreichen.

Das Verfahren ist somit insofern dadurch vorteilhaft, als dass die Dringlichkeit eines Verbindungswunsches anhand der beiden Kriterien - der Anzahl an Verbindungsversuchen und des zeitlichen Abstands zwischen erstem und letztem Verbindungsversuch - bestimmt wird. Darüber hinaus ist vorteilhaft, dass eine Übermittlung der tatsächlichen Rufnummer der dritten Endeinrichtung EG3 an die erste Endeinrichtung EG1 unterdrückt werden kann, so dass die Rufnummer der dritten Endeinrichtung EG3, die eventuell nicht bekannt gemacht werden soll, gegenüber dem die erste Endeinrichtung EG1 bedienenden ersten Teilnehmer geheim bleibt.

Im Folgenden werden Abwandlungen bisher noch nicht erläuterter Abläufe des Verfahrens näher erläutert, wobei die erläuterten Schritte stets im Zusammenhang mit den vorab diskutierten Verfahrensschritten zu sehen sind.

Vorstehend wurde davon ausgegangen, dass der erste Teilnehmer in kurzer Abfolge mehrere Verbindungsversuche auslöst und stets lediglich ein Freizeichen für die zweite Endeinrichtung EG2 erhält, ohne dass es zu einer erfolgreichen Sprachverbindung kommt.

Wird in Abwandlung dieses Ausführungsbeispiels davon ausgegangen, dass die Zeitspanne zwischen der ersten Signalisierung SIG_{RA} und der zuletzt erkannten Signalisierung SIG_{RA} die vorgegebene Referenz-Zeitspanne übersteigt, so werden die Verbindungsversuche nicht als dringend eingestuft. Der entsprechende Datensatz der in Figur 2 dargestellten Tabelle wird daraufhin neu initialisiert, d.h. insbesondere wird für das Feld T der Zeitpunkt des Erkennens der zuletzt eingetroffenen Signalisierung gesetzt und der Wert der Anzahl N auf Null zurückgesetzt.

Im vorstehenden Ausführungsbeispiel wurde bei Erfüllung der beiden Kriterien der Anruf zur dritten Endeinrichtung EG3 umgeleitet, ohne dass eine Signalisierung zur zweiten Endeinrichtung EG2 erfolgt. Vorzugsweise kann eine Signalisierung jedoch auch an die beiden Endeinrichtungen EG2 und EG3 erfolgen, so dass beide Geräte den eingehenden Ruf am Endgerät anzeigen, so dass die Verbindung zu derjenigen Endeinrichtung EG2, EG3 durchgeschaltet wird, an der der Ruf angenommen wird.

Alternativ sind auch Ausgestaltungen möglich, dass bei Erfüllung der beiden Kriterien die Signalisierung zuerst zur zweiten Endeinrichtung EG2 geleitet wird, um dann nach beispielsweise dreimal Klingeln, zur dritten Endeinrichtung EG3 umgeleitet zu werden.

Eine besonders bevorzugte Ausgestaltung besteht weiterhin darin, keine Umleitung zu einem weiteren Endgerät vorzusehen, sondern die alternative Kommunikationsübertragung als Kurzmittelung an ein alternatives Endgerät zu implementieren. Zum Anmeldezeitpunkt ist eine übliche Form der Kurzmitteilung eine SMS an ein Mobilfunkendgerät. Jedoch sind auch andere Formen von Kurzmitteilungen denkbar.

Vorzugsweise kann eine Kopplung der Vermittlungsanlage PBX an ein Mobilfunk- bzw. SMS-Gateway vorgesehen sein (nicht dargestellt). Sofern die beiden Kriterien der Zeit-Information und der Anzahl an Verbindungsversuchen erfüllt sind, kann durch die Überwachungseinheit UE das SMS-Gateway derart angesteuert werden, dass eine kurze textuelle SMS-Nachricht als alternative Kommunikationsübertragung an ein Mobilfunkgerät des zweiten Teilnehmers übermittelt wird, mit Information zu den Verbindungsversuchen des ersten Teilnehmers. Insbesondere die Rufnummer der ersten Endeinrichtung EG1 und eine Zeitangabe, wann versucht wurde die zweiten Endeinrichtung EG2 zu erreichen, ist dabei angegeben.

Vorzugsweise kann die Rufnummer der ersten Endeinrichtung EG1 als Absende-Rufnummer der SMS gesetzt werden, so dass ein Rückruf zur ersten Endeinrichtung EG1 besonders einfach möglich ist, da Mobilfunkendgeräte für eine angezeigte SMS üblicherweise eine Funktion anbieten, bei der durch einfache Menüauswahl ein Rückruf zu eine Quellrufnummer der SMS initiiert wird.

Weiterhin ist denkbar, dass für den Inhalt der SMS oder alternativ einer MMS (Multimedia Messaging Service) weitere Informationen von der ersten Endeinrichtung EG1 - textuell oder sprachlich - abgefragt werden und diese dann in die SMS oder MMS als eine Art Betreff-Information integriert werden. Somit kann ein zweiter Teilnehmer, der sich eventuell in eine Besprechung befindet, die tatsächliche Dringlichkeit des Anliegens des ersten Teilnehmers erkennen.

Bei Generierung einer SMS oder MMS kann eine Verbindung zwischen der ersten Endeinrichtung EG1 und eines Dienstes der Vermittlungsanlage PBX durchgeschaltet werden, so dass an der ersten Endeinrichtung EG1 daraufhin eine Sprachansage ausgegeben werden kann, dass nun auf einen alternativen Weg der zweite Teilnehmer kontaktiert wird und weitere Verbindungsaufbauversuche von der ersten Endeinrichtung EG1 nicht nötig sind.

Als Signalisierung, die zu keinem erfolgreichen Rufaufbau führt, wurde bisher nur der Fall genannt, dass die zweite Endeinrichtung EG2 einen Klingelton ausgibt und an der ersten Endeinrichtung EG1 ein Freizeichen ausgegeben wird. Der Verbindungsaufbauversuch wurde dann durch die ersten Endeinrichtung EG1 beendet.

Jedoch werden in realen Systemen eingehende Gespräche häufig auf Anrufbeantworter oder gar zu Kollegen des zweiten Teilnehmers mittels Rufumleitung weitergeleitet. Um die Erfindung in derartigen Systemen optimal einzusetzen, sind derartige Ruf-Durchschaltungen/Weiterleitungen vorzugsweise nicht als erfolgreiche Verbindungsaufbauversuche im Sinne der Erfindung zu werten, da ja weiterhin der zweite Teilnehmer nicht erreicht wurde. Somit kann auch bei Durchschaltung einer Verbindung zu einem Anrufbeantworter oder bei Rufumleitung das erfindungsgemäße Verfahren derart fortgesetzt werden, dass die beiden Kriterien überprüft werden und dass eventuell die Anzahl N in der in Figur 2 dargestellten Tabelle inkrementiert wird.

Im dargelegten Ausführungsbeispiel ist ferner vorgesehen, dass die zweite Endeinrichtung EG2 und die dritte Endeinrichtung EG3 einem selben, zweiten Teilnehmer zugeordnet sind. Der zweite Teilnehmer kann die zweite Endeinrichtung EG2 und/oder die dritte Endeinrichtung EG3 bedienen, je nachdem wo er sich gerade aufhält. Weiterhin ist aber auch möglich, dass die zweite Endeinrichtung EG2 dem zweiten Teilnehmer zugeordnet ist, während die dritte Endeinrichtung EG3 einem dritten Teilnehmer zugeordnet ist. Somit ist eine einfache Möglichkeit einer Urlaubs- oder Krankheitsvertretung für lediglich dringende Anrufe implementierbar.

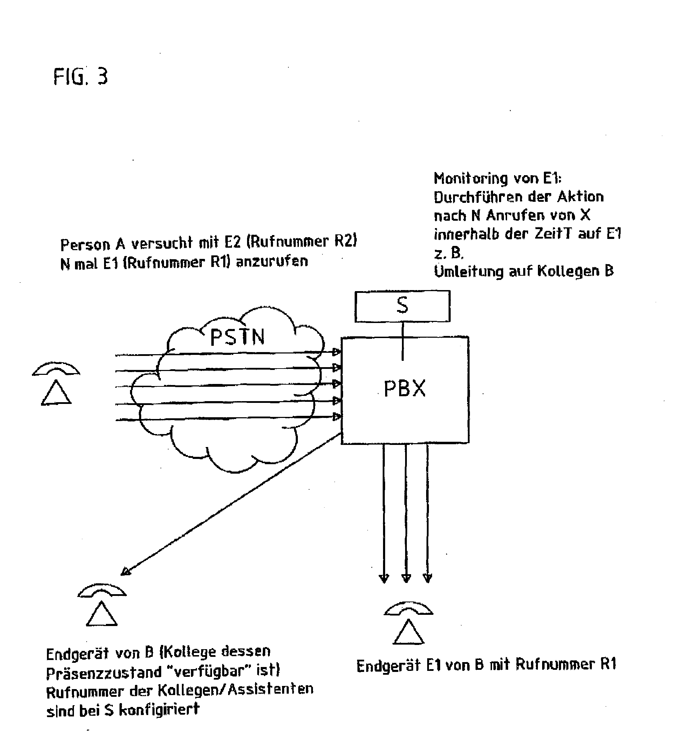

In Figur 3 wird ein abgewandeltes Ausführungsbeispiel des Kommunikationssystem mit den am erfindungsgemäßen Verfahren beteiligten Einrichtungen und im Kommunikationssystem auftretende Meldungen gezeigt, das nachstehend erläutert wird.

Es kommt immer wieder vor, dass man jemanden versucht dringend unter einer bekannten Büro-Telefonrufnummer zu erreichen. Derzeit hat man keine Möglichkeit einen Anruf als sehr dringend zu kennzeichnen wie es etwa bei email-Nachrichten machbar wäre. Hat man keine andere Rufnummer (z.B. Mobilrufnummer oder private Rufnummer, oder Rufnummer eines Kollegen) der gewünschten Person, wird man in der Regel in kurzen Abständen erneut versuchen, die gewünschte Person unter der bekannten Rufnummer zu erreichen - in der Hoffnung, dass die Person in der Zwischenzeit wieder zurück ist. Wünschenswert wäre allerdings, dass ohne Nachschlagen von Alternativtelefonnummern von Kollegen - durch eine Filterfunktion die dringenden Anrufe auf Rufnummern von verfügbaren Kollegen durchgestellt werden, wobei der Begriff verfügbar hierbei den Präsenzzustand des Kollegen bedeutet. Normalerweise läuft dies folgendermaßen ab:
- Mehrmaliges Anrufen einer Person unter derselben Rufnummer in kurzem Zeitraum und
- Hinterlassen einer Meldung auf dem Anrufbeantworter in der Hoffnung, dass die angerufene Person erreichbar wird bzw zurückruft.
- Person A hat nur Kenntnis von Rufnummer R1 des Kommunikationsendgeräts E1 von Person B.

Diese Nachteile sollen durch die abgewandelte erfindungsgemäße Ausführungsform vermieden werden.
- A versucht nun B durch Wahl von R1 des Endgerätes E1 zu erreichen. Anruf von B bleibt unbeantwortet oder Anrufbeantworter nimmt Gespräch entgegen. A legt auf.
- Nach kurzer Zeit, Wiederholung desselben Vorgangs.
- Tritt nun dieser Vorgang insgesamt N mal innerhalb einer Zeitspanne T auf, kann das Endgerät E1 oder das Vermittlungssystem P an dem E1 verbunden ist eine Aktion auslösen.
- Die Funktionseinheit S (implementiert innerhalb von P oder in einer Applikation außerhalb von P, oder innerhalb oder außerhalb von E1) überwacht die Anrufe auf E1 und zählt eingehende Anrufe nach Anrufer. Wird innerhalb der Zeit T die Schwelle N überschritten wird eine Aktion ausgelöst.

Zwei Beispiele solcher Aktionen sind folgende: Umleiten des eingehenden Anrufs auf eine nur dem System bekannte Rufnummer von Kollegen oder Assistenz R2 unter Berücksichtigung des Präsenzzustandes des Kollegen.

Durch diese abgewandelte Ausführungsform soll die Aufwertung der Echtzeit-Kommunikationslösung durch verbesserte und kontrollierte Erreichbarkeit für dringende Anrufe erreicht werden. In dringenden Fällen wird nun automatisch ein verfügbarer Kollege erreicht, ohne dass dessen Rufnummer bekannt sein muss bzw. bekannt gegeben werden muß. Vorteilhaft ist, dass nur dringende Anrufe an die Kollegen weitergeleitet werden - also diese nicht bei jedem Anruf gestört werden.

## Patentansprüche

1. Verfahren zum Etablieren einer Kommunikationsübertragung (ALTV), wobei
nach Erkennen einer im Rahmen eines Verbindungsaufbaus von einer ersten Endeinrichtung (EG1) ausgehenden an eine zweite Endeinrichtung (EG2) gerichteten ursprünglichen Signalisierung (SIG_{RA}), bei der die zweite Endeinrichtung (EG2) über eine der zweiten Endeinrichtung (EG2) zugeordneten Zieladresse adressiert wird,
- erfasst wird, in welcher Anzahl weitere Signalisierungen (SIG_{RA}) mit derselben die erste Endeinrichtung (EG1) spezifizierenden Absendeadresse und derselben Zieladresse im Rahmen weiterer Verbindungsaufbauversuche erkannt werden,
- eine Auswertung einer Zeit-Information bezüglich Zeitpunkten des Erkennens der erkannten ursprünglichen Signalisierung (SIG_{RA}) und der erkannten weiteren Signalisierungen (SIG_{RA}) in Relation zu einer vorgegebenen mindestens einen Zeitspanne erfolgt,
**dadurch gekennzeichnet, dass**
- bei positivem Auswertungsergebnis und bei Überschreiten der erfassten Anzahl von erkannten weiteren Signalisierungen mit derselben Absendeadresse und derselben Zieladresse gegenüber einem Vergleichswert für einen zuletzt erkannten Verbindungsaufbauversuch der weiteren Verbindungsaufbauversuche eine alternative Kommunikationsübertragung (ALTV) etabliert wird, wobei
a) die Zeit-Information als mindestens eine erste Zeitdifferenz zwischen dem Erkennen von zwei aufeinanderfolgenden Signalisierungen (SIG_{RA}) der ursprünglichen Signalisierung (SIG_{RA}) und der weiteren Signalisierungen (SIG_{RA}) gebildet wird, und
b) die mindestens eine Zeitspanne eine Obergrenze für eine jeweilige der mindestens einen ersten Zeitdifferenz darstellt, und
c) ein Ergebnis der Auswertung als positives Auswertungsergebnis bewertet wird, sofern alle der mindestens einen ersten Zeitdifferenz kleiner als die mindestens eine Zeitspanne ist.

2. Verfahren nach Anspruch 1,
**dadurch gekennzeichnet,**
**dass**
a2) die Zeit-Information als eine zweite Zeitdifferenz zwischen dem Erkennen einer dem zuletzt erkannten Verbindungsaufbauversuch zugeordneten Signalisierung (SIG_{RA}) und dem Erkennen der ursprünglichen Signalisierung (SIG_{RA}) gebildet wird, und
b2) die mindestens eine zweite Zeitspanne eine Obergrenze für diese zweite Zeitdifferenz darstellt, und
c2) ein Ergebnis der Auswertung als positives Auswertungsergebnis bewertet wird, sofern diese zweite Zeitdifferenz kleiner als die mindestens eine zweite Zeitspanne ist.

3. Verfahren nach einem der vorhergehenden Ansprüche,
**dadurch gekennzeichnet,**
**dass** die alternative Kommunikationsübertragung (ALTV) zwischen der ersten Endeinrichtung (EG1) und einer dritten Endeinrichtung (EG3) mittels Adressieren einer zur dritten Endeinrichtung (EG3) zugeordneten alternativen Zieladresse etabliert wird.

4. Verfahren nach einem der vorhergehenden Ansprüche,
**dadurch gekennzeichnet,**
**dass** die alternative Kommunikationsübertragung (ALTV) als Kommunikationsverbindung für Sprache, Video oder Multimedia ausgestaltet ist.

5. Verfahren nach einem der Ansprüche 1 oder 2,
**dadurch gekennzeichnet,**
**dass** im Rahmen der alternativen Kommunikationsübertragung (ALTV) eine Mitteilung an eine alternativen Zieladresse übermittelt wird.

6. Verfahren nach Anspruch 5,
**dadurch gekennzeichnet,**
**dass** die Mitteilung eine Ausgabe einer Sprach-, Text-, oder Multimedia-Nachricht oder ein Ansprechen einer Anzeige-Einheit an einer dritten Endeinrichtung (EG3) bewirkt.

7. Verfahren nach einem der vorhergehenden Ansprüche,
**dadurch gekennzeichnet,**
**dass** beim Erfassen der Anzahl der erkannten weiteren Signalisierungen (SIG_{RA}) ein Inkrementieren dieser Anzahl durchgeführt wird, sofern für eine jeweilige der weiteren Signalisierungen (SIG_{RA}) ein Verbindungsaufbauversuch durch die erste Endeinrichtung (EG1) abgebrochen wird.

8. Verfahren nach einem der vorhergehenden Ansprüche,
**dadurch gekennzeichnet,**
**dass** beim Erfassen der Anzahl der erkannten weiteren Signalisierungen (SIG_{RA}) ein Zurücksetzen dieser Anzahl durchgeführt wird, sofern für eine jeweilige der weiteren Signalisierungen (SIG_{RA}) ein Verbindungsaufbauversuch als aktive Kommunikationsverbindung zwischen der ersten Endeinrichtung (EG1) und der zweiten Endeinrichtung (EG2) durchgeschaltet wird.

9. Verfahren nach einem der vorhergehenden Ansprüche,
**dadurch gekennzeichnet,**
**dass** beim Erfassen der Anzahl der erkannten weiteren Signalisierungen (SIG_{RA}) ein Inkrementieren dieser Anzahl durchgeführt wird, sofern für eine jeweilige der weiteren Signalisierungen (SIG_{RA}) ein Verbindungsaufbauversuch als aktive Kommunikationsverbindung zwischen der ersten Endeinrichtung (EG1) und einer der Zieladresse zugeordneten Anrufbeantworterfunktion durchgeschaltet wird.

10. Verfahren nach einem der vorhergehenden Ansprüche,
**dadurch gekennzeichnet,**
**dass** beim Erfassen der Anzahl der erkannten weiteren Signalisierungen (SIG_{RA}) ein Zurücksetzen dieser Anzahl durchgeführt wird, sofern für eine jeweilige der weiteren Signalisierungen (SIG_{RA}) ein Verbindungsaufbauversuch durch Übermitteln einer Besetzt-Information an die erste Endeinrichtung (EG1) abgewiesen wird.

11. Verfahren nach einem der Ansprüche 1 bis 9,
**dadurch gekennzeichnet,**
**dass** beim Erfassen der Anzahl der erkannten weiteren Signalisierungen (SIG_{RA}) ein Inkrementieren dieser Anzahl durchgeführt wird, sofern für eine jeweilige der weiteren Signalisierungen (SIG_{RA}) ein Verbindungsaufbauversuch durch Übermitteln einer Besetzt-Information an die erste Endeinrichtung (EG1) abgewiesen wird.

12. Verfahren nach einem der vorhergehenden Ansprüche,
**dadurch gekennzeichnet,**
**dass** das Verfahren durch den der zweiten Endeinrichtung (EG2) zugeordneten zweiten Teilnehmer aktiv oder inaktiv geschaltet wird.

13. Verfahren nach Anspruch 12,
**dadurch gekennzeichnet,**
**dass** das aktiv oder inaktiv Schalten manuell erfolgt oder durch Auswertung eines Präsenz-Zustands, der bezüglich dem Anwesenheitszustand des zweiten Teilnehmers aktualisiert wird.

14. Verfahren nach einem der Ansprüche 1 bis 13,
**dadurch gekennzeichnet,**
**dass** die alternative Kommunikationsübertragung (ALTV) zwischen der ersten Endeinrichtung (EG1; E2) und der zweiten Endeinrichtung (EG2, B) mittels Adressieren einer zur zweiten Endeinrichtung (EG2; E1) zugeordneten alternativen Zieladresse etabliert wird, die unter Berücksichtigung des Präsenzzustandes der Kollegen ausgewählt und als alternative Zieladresse verwendet wird (Fig. 3).

15. Kommunikationseinrichtung zum Etablieren einer Kommunikationsübertragung,
umfassend
- einer Erkennungseinheit, die derart eingerichtet ist, dass eine im Rahmen eines Verbindungsaufbaus von einer ersten Endeinrichtung (EG1) ausgehenden an eine zweite Endeinrichtung (EG2) gerichteten ursprünglichen Signalisierung (SIG_{RA}) erkannt wird, bei der die zweite Endeinrichtung (EG2) über eine der zweiten Endeinrichtung (EG2) zugeordneten Zieladresse adressiert wird;
- einer Erfassungseinheit, die derart eingerichtet ist, dass erfasst wird in welcher Anzahl weitere Signalisierungen (SIG_{RA}) mit derselben die erste Endeinrichtung (EG1) spezifizierende Absendeadresse und derselben Zieladresse im Rahmen weiterer Verbindungsaufbauversuche erkannt werden;
**gekennzeichnet durch**
- eine Zeit-Auswertungseinheit, die derart eingerichtet ist, dass eine Zeit-Information bezüglich Zeitpunkten des Erkennens der erkannten ursprünglichen Signalisierung (SIG_{M}) und der erkannten weiteren Signalisierungen (SIG_{M}) in Relation zu einer vorgegebenen mindestens einen Zeitspanne ausgewertet wird, wobei
a) die Zeit-Information als mindestens eine erste Zeitdifferenz zwischen dem Erkennen von zwei aufeinanderfolgenden Signalisierungen (SIG_{M}) der ursprünglichen Signalisierung (SIG_{M}) und der weiteren Signalisierungen (SIG_{RA}) gebildet wird, und
b) die mindestens eine Zeitspanne eine Obergrenze für eine jeweilige der mindestens einen ersten Zeitdifferenz darstellt, und
c) ein Ergebnis der Auswertung als positives Auswertungsergebnis bewertet wird, sofern alle der mindestens einen ersten Zeitdifferenz kleiner als die mindestens eine Zeitspanne ist; und
- eine Übertragungsauslöseeinheit, die derart eingerichtet ist, dass eine alternativen Kommunikationsübertragung (ALTV) etabliert wird für einen zuletzt erkannten Verbindungsaufbauversuch der weiteren Verbindungsaufbauversuche bei positivem Auswertungsergebnis und bei Überschreiten der erfassten Anzahl von erkannten weiteren Signalisierungen (SIG_{RA}) mit derselben Absendeadresse und derselben Zieladresse gegenüber einem Vergleichswert.

## Claims

1. Method for establishing a communication transmission (ALTV), wherein upon detecting an original signalling (SIG_{RA}) directed outgoing from a first terminal (EG1) to a second terminal (EG2) within the scope of establishment of a connection, the second terminal (EG2) being addressed via a target address associated with the second terminal (EG2),
- it is recorded in what quantity further signallings (SIG_{RA}) having the same sender address specifying the first terminal (EG1) and the same target address are detected within the scope of further attempts to establish a connection,
- an evaluation of time information is carried out with regard to the times of the detection of the detected original signalling (SIG_{RA}) and the detected further signallings (SIG_{RA}) in relation to at least one predetermined time period,
**characterised in that**
- with a positive evaluation result, and in the event of exceeding the recorded number of detected further signallings with the same sender address and the same target address compared to a comparison value, an alternative communication transmission (ALTV) is established, wherein
a) the time information is formed as at least one first time difference between the detection of two sequential signallings (SIG_{RA}) of the original signalling (SIG_{RA}) and the further signallings (SIG_{RA}), and
b) the at least one time period represents an upper limit for one individual time difference of the at least one first time difference(s), and
c) a result of the evaluation is evaluated as a positive evaluation result, provided all of the at least one first time difference(s) are smaller than the at least one time interval.

2. Method according to claim 1
**characterised in that**
a2) the time information is formed as a second time difference between the detecting of a signalling (SIG_{RA}) allocated to the last detected attempt to establish a connection and the detection of the original signalling (SIG_{RA}), and
b2) the at least one second time interval represents an upper limit for this second time difference, and
c2) a result of the evaluation is evaluated as a positive evaluation result, provided that this second time difference is smaller than the at least one second time interval.

3. Method according to any one of the preceding claims,
**characterised in that**
the alternative communication transmission (ALTV) between the first terminal (EG1) and a third terminal (EG3) is established by means of addressing an alternative target address allocated to the third terminal (EG3).

4. Method according to any one of the preceding claims,
**characterised in that**
the alternative communication transmission (ALTV) is formulated as a communication transmission for speech, video, or multimedia.

5. Method according to one of claims 1 or 2,
**characterised in that**
in the scope of the alternative communication transmission (ALTV) a message is transmitted to an alternative target address.

6. Method according to claim 5,
**characterised in that**
the message takes effect of the issue of a speech, text, or multimedia message, or an addressing a display unit at a third terminal (EG3).

7. Method according to any one of the preceding claims,
**characterised in that**
at the recording of the number of detected further signallings (SIG_{RA}), an incrementing of this number is carried out, inasmuch as, for one respective signalling of the further signallings (SIG_{RA}), a connection establishing attempt by the first terminal (EG1) is interrupted.

8. Method according to any one of the preceding claims,
**characterised in that**
at the recording of the number of detected further signallings (SIG_{RA}), a resetting of this number is carried out, inasmuch as a connection establishing attempt for a respective signalling of the further signallings (SIG_{RA}) is switched through as an active communication connection between the first terminal (EG1) and the second terminal (EG2).

9. Method according to any one of the preceding claims,
**characterised in that**
at the recording of the number of detected further signallings (SIG_{RA}), an incrementing of this number is carried out, inasmuch as, for one respective signalling of the further signallings (SIG_{RA}), a connection establishing attempt is switched through as an active communication connection between the first terminal (EG1) and a call answering function allocated to the target address.

10. Method according to any one of the preceding claims,
**characterised in that**
at the recording of the number of detected further signallings (SIG_{RA}), a resetting of this number is carried out, inasmuch as a connection establishing attempt for a respective signalling of the further signallings (SIG_{RA}) is rejected by the transmitting of an engaged message to the first terminal (EG1).

11. Method according to any one of the claims 1 to 9,
**characterised in that**
at the recording of the number of detected further signallings (SIG_{RA}), an incrementing of this number is carried out, inasmuch as, for one respective signalling of the further signallings (SIG_{RA}), a connection establishing attempt for a respective signalling of the further signallings (SIG_{RA}) is rejected by the transmitting of an engaged message to the first terminal (EG1).

12. Method according to any one of the preceding claims,
**characterised in that**
the method is switched active or inactive by the second participant party allocated to the second terminal (EG2).

13. Method according to claim 12,
**characterised in that**
the active or inactive switching is carried out manually or by the evaluation of a presence state, which is updated in respect of the presence state of the second participant party.

14. Method according to any one of claims 1 to 13,
**characterised in that**
the alternative communication transmission (ALTV) between the first terminal (EG1; E2) and the second terminal (EG2, B) is established by means of addressing an alternative target address allocated to the second terminal (EG2, E1), which is selected by taking account of the presence state of the colleagues, and is used as an alternative target address (Fig. 3).

15. Communication device for the establishing of a communication transmission, comprising
- a detection unit, which is arranged in such a way that an original signalling (SIG_{RA}) outgoing from a first terminal (EG1) directed to a second terminal (EG2) within the scope of establishing a connection is detected, in which the second terminal (EG2) is addressed via a target address allocated to the second terminal (EG2);
- a detection unit, which is arranged in such a way that it is detected in what quantity further signallings (SIG_{RA}) with the same sender address specifying the first terminal (EG1) and the same target address are recognised in the scope of further attempts to establish a connection;
**characterised by**
a time evaluation unit, which is arranged in such a way that an item of time information relating to the times of detection of the detected original signalling (SIG_{RA}) and of the detected further signallings (SIG_{RA}) is evaluated in relation to an at least one predetermined time period, wherein
a) the time item of information is formed as at least one first time difference between the detection of two sequential signallings (SIG_{RA}) of the original signalling (SIG_{RA}) and the further signallings (SIG_{RA}), and
b) the at least one time period represents an upper limit for a respective time difference of the at least one time difference(s), and
c) a result of the evaluation is evaluated as a positive evaluation result, provided that all of the at least one first time difference(s) is smaller than the at least one time period; and
- a transmission actuation unit, which is arranged in such a way that an alternative communication transmission (ALTV) is established for a last identified attempt to establish a connection of the further attempts to establish a connection with a positive evaluation result, and in the event of the exceeding of the detected number of identified further signallings (SIG_{RA}) with the same sender address and the same target address in relation to a comparison value.

## Revendications

1. Procédé servant à établir une transmission de communication (ALTV), sachant
qu'après l'identification d'une signalisation (SIG_{RA}) initiale, dans le cadre de l'établissement d'une connexion, provenant d'un premier terminal (EG1) et envoyée à un deuxième terminal (EG2), le deuxième terminal (EG2) étant adressé lors de ladite signalisation par l'intermédiaire d'une adresse cible associée au deuxième terminal (EG2),
- on détermine le nombre d'autres signalisations (SIG_{RA}), qui sont identifiées avec la même adresse d'émission spécifiant le premier terminal (EG1) et avec la même adresse cible dans le cadre d'autres tentatives d'établissement de connexion,
- on effectue une analyse d'une information de temps concernant des instants d'identification de la signalisation (SIG_{RA}) initiale identifiée et d'autres signalisations (SIG_{RA}) identifiées en lien avec au moins un intervalle de temps prédéfini,
**caractérisé en ce**
- **qu'**en cas de résultat d'analyse positif et en cas de dépassement du nombre déterminé d'autres signalisations identifiées avec la même adresse d'émission et avec la même adresse cible par rapport à une valeur de comparaison pour une tentative d'établissement de connexion identifiée en dernier lieu parmi d'autres tentatives d'établissement de communication, on établit une transmission de communication (ALTV) alternative, sachant
a) **que** l'information de temps est formée en tant qu'au moins une première différence de temps entre l'identification de deux signalisations (SIG_{RA}) consécutives de la signalisation (SIG_{RA}) initiale et des autres signalisations (SIG_{RA}), et
b) **que** l'intervalle de temps au moins au nombre de un constitue une limite supérieure pour une première différence de temps respective au moins au nombre de une, et
c) **qu'**on évalue un résultat de l'analyse en tant que résultat d'analyse positif dans la mesure où la première différence de temps est inférieure à l'intervalle de temps au moins au nombre de un.

2. Procédé selon la revendication 1,
**caractérisé en ce**
**que**
a2) l'information de temps est formée sous la forme d'une deuxième différence de temps entre l'identification d'une signalisation (SIG_{RA}) associée à la tentative d'établissement de connexion identifiée en dernier lieu et l'identification de la signalisation (SIG_{RA}) initiale, et en ce que
b2) le deuxième intervalle de temps au moins au nombre de un représente une limite supérieure pour ladite deuxième différence de temps, et en ce
c2) qu'on évalue un résultat de l'analyse comme résultat d'analyse positif, dans la mesure où ladite deuxième différence de temps est inférieure au deuxième intervalle de temps au moins au nombre de un.

3. Procédé selon l'une quelconque des revendications précédentes,
**caractérisé en ce**
**que** la transmission de communication (ALTV) alternative est établie entre le premier terminal (EG1) et un troisième terminal (EG3) au moyen de l'adressage d'une adresse cible alternative associée au troisième terminal (EG3).

4. Procédé selon l'une quelconque des revendications précédentes,
**caractérisé en ce**
**que** la transmission de communication (ALTV) alternative est configurée sous la forme d'une connexion de communication vocale, vidéo ou multimédia.

5. Procédé selon l'une quelconque des revendications 1 ou 2,
**caractérisé en ce**
**que** dans le cadre de la transmission de communication (ALTV) alternative, on transfère une notification à une adresse cible alternative.

6. Procédé selon la revendication 5,
**caractérisé en ce**
**que** la notification entraîne l'émission d'un message vocal, d'un message sous forme de texte ou d'un message multimédia ou une réponse d'une unité d'affichage à un troisième terminal (EG3).

7. Procédé selon l'une quelconque des revendications précédentes,
**caractérisé en ce**
**que** lors de la détermination du nombre des autres signalisations (SIG_{RA}) identifiées, on effectue une incrémentation dudit nombre, dans la mesure où une tentative d'établissement de connexion est interrompue par le premier terminal (EG1) pour l'une des autres signalisations (SIG_{RA}).

8. Procédé selon l'une quelconque des revendications précédentes,
**caractérisé en ce**
**que** lors de la détection du nombre des autres signalisations (SIG_{RA}) identifiés, on effectue une déduction dudit nombre dans la mesure où une tentative d'établissement de connexion est commutée en tant que connexion de communication active entre le premier terminal (EG1) et le deuxième terminal (EG2) pour l'une des autres signalisations (SIG_{RA}).

9. Procédé selon l'une quelconque des revendications précédentes,
**caractérisé en ce**
**que** lors de la détermination du nombre des autres signalisations (SIG_{RA}) identifiées, on effectue une incrémentation dudit nombre dans la mesure où une tentative d'établissement de connexion est commutée en tant que connexion de communication active entre le premier terminal (EG1) et une fonction de répondeur téléphonique associée à l'adresse cible pour l'une des autres signalisations (SIG_{RA}).

10. Procédé selon l'une quelconque des revendications précédentes,
**caractérisé en ce**
**que** lors de la détermination du nombre des autres signalisations (SIG_{RA}) identifiées, on effectue une déduction dudit nombre dans la mesure où une tentative d'établissement de connexion est rejetée du fait de la transmission d'une information d'occupation au premier terminal (EG1) pour l'une des autres signalisations (SIG_{RA}).

11. Procédé selon l'une quelconque des revendications 1 à 9,
**caractérisé en ce**
**que** lors de la détermination du nombre des autres signalisations (SIG_{RA}) identifiées, on effectue une incrémentation dudit nombre, dans la mesure où une tentative d'établissement de connexion est rejetée du fait de la transmission d'une information d'occupation au premier terminal (EG1) pour l'une des autres signalisations (SIG_{RA}).

12. Procédé selon l'une quelconque des revendications précédentes,
**caractérisé en ce**
**que** le procédé est activé ou désactivé par le deuxième abonné associé au deuxième terminal (EG2).

13. Procédé selon la revendication 12,
**caractérisé en ce**
**que** l'activation ou la désactivation est effectuée manuellement ou du fait de l'analyse d'un état de présence, qui est mis à jour par rapport à l'état d'absence du deuxième abonné.

14. Procédé selon l'une des revendications 1 à 13,
**caractérisé en ce**
**que** la transmission de communication (ALTV) alternative entre le premier terminal (EG1 ; E2) et le deuxième terminal (EG2, B) est établie au moyen de l'adressage d'une adresse cible alternative associée au deuxième terminal (EG2 ; E1), qui est sélectionnée en tenant compte de l'état de présence des collègues et qui est utilisée en tant qu'adresse cible alternative (fig. 3).

15. Dispositif de communication servant à établir une transmission de communication,
comprenant
- une unité d'identification, qui est mise au point de manière à identifier une signalisation (SIG_{RA}) initiale, dans le cadre d'un établissement de connexion, provenant d'un premier terminal (EG1) et envoyée à un deuxième terminal (EG2), le deuxième terminal (EG2) étant adressé, dans le cadre de ladite signalisation, par l'intermédiaire d'une adresse cible associée au deuxième terminal (EG2) ;
- une unité de détermination, qui est mise au point de manière à déterminer le nombre d'autres signalisations (SIG_{RA}) identifiées avec la même adresse d'émission spécifiant le premier terminal (EG1) et avec la même adresse cible dans le cadre d'autres tentatives d'établissement de connexion ;
**caractérisé par**
- une unité d'analyse de temps, qui est mise au point de manière à analyser une information de temps concernant des instants d'identification de la signalisation (SIG_{M}) initiale identifiée et des autres signalisations (SIG_{M}) identifiées en lien avec au moins un intervalle de temps prédéfini, sachant que
a) l'information de temps est formée en tant qu'au moins une première différence de temps entre l'identification de deux signalisations (SIG_{RA}) consécutives de la signalisation (SIG_{M}) initiale et des autres signalisations (SIG_{RA}), et
b) l'intervalle de temps au moins au nombre de un représente une limite supérieure pour la première différence de temps respective au moins au nombre de une, et
c) on évalue un résultat de l'analyse comme résultat d'analyse positif dans la mesure où la première différence de temps au moins au nombre de une est inférieure à l'intervalle de temps au moins au nombre de un ;
- une unité de déclenchement de transmission, qui est mise au point de manière à établir une transmission de communication (ALTV) alternative pour une tentative d'établissement de connexion identifiée en dernier lieu des autres tentatives d'établissement de connexion en cas d'un résultat d'analyse positif et en cas de dépassement du nombre déterminé des autres signalisations (SIG_{RA}) identifiées avec la même adresse d'émission et avec la même adresse cible par rapport à une valeur de comparaison.
